## Europäisches Patentamt

(19) **European Patent Office**

**Office européen des brevets**

(11) Veröffentlichungsnummer: **0 105 223**
**B1**

(12) # EUROPÄISCHE PATENTSCHRIFT

(45) Veröffentlichungstag der Patentschrift:
**27.12.85**

(51) Int. Cl.⁴: **B 27 F 4/00**

(21) Anmeldenummer: **83108867.9**

(22) Anmeldetag: **08.09.83**

(54) **Maschine zum Bohren und Einsetzen von Beschlagteilen in plattenförmige Werkstücke.**

(30) Priorität: **30.09.82 DE 3236307**

(43) Veröffentlichungstag der Anmeldung:
**11.04.84 Patentblatt 84/15**

(45) Bekanntmachung des Hinweises auf die Patenterteilung:
**27.12.85 Patentblatt 85/52**

(84) Benannte Vertragsstaaten:
**BE FR GB IT NL SE**

(56) Entgegenhaltungen:
**DD - A - 63 155**
**DE - A - 2 421 666**
**DE - A - 2 928 108**
**DE - B - 1 169 110**
**DE - B - 2 326 260**
**US - A - 1 137 854**
**US - A - 2 567 191**

(73) Patentinhaber: **IMA-Norte Maschinenfabriken Klessmann GmbH & Co., Am Ölbach 19, D-4830 Gütersloh 1 (DE)**

(72) Erfinder: **Riesmeier, Wilhelm, Franz-Liszt-Strasse 5, D-4990 Lübbecke 1 (DE)**
Erfinder: **Kempkensteffen, Heinz, Im grünen Winkel 1, D-4835 Rietberg 3 (DE)**

(74) Vertreter: **Elbertzhagen, Otto et al, Patentanwälte Thielking & Elbertzhagen Gadderbaumer Strasse 20, D-4800 Bielefeld 1 (DE)**

## Beschreibung

Die Erfindung bezieht sich auf eine Maschine zum Bohren und Einsetzen von Beschlagteilen in plattenförmige Werkstücke der im Gattungsbegriff des Patentanspruchs 1 näher bezeichneten Art.

Auf dem Markt sind solche Maschinen bekannt, bei denen die Werkstücke im Durchlauf auf der Fördervorrichtung an dem Bearbeitungszentrum vorbeigeführt werden, um die geforderten Bohrlöcher nach einem vorgegebenen Bohrbild in die Werkstücke einzuarbeiten. Es sind weiter Maschinen bekannt, siehe die DE-A-29 20 801, bei denen das Bearbeitungszentrum über einen Bearbeitungsplatz hinweggeführt wird, auf den die Werkstücke nacheinander aufgelegt werden. Das Bearbeitungszentrum stellt dabei denjenigen Teil der Maschine dar, an dem die einzelnen Bearbeitungsaggregate zu einer Bearbeitungseinheit zusammengefaßt sind. Bei den ursprünglichen Maschinen der vorgenannten Art wurden die einzelnen Bearbeitungsaggregate für eine jeweils zu fertigende Serie fest eingerichtet; wenn auf eine Serie mit anderen Bohrbildern umgestellt werden mußte, wurde die Maschine entsprechend umgerüstet.

Die genannten Maschinen sind in zwei Richtungen weiter entwickelt worden. Zum einen wurde angestrebt, die Durchsatzleistung der Werkstücke weiter zu erhöhen, und man hat daher das Bearbeitungszentrum über einen Wegabschnitt synchron mit der Fördereinrichtung mitlaufen lassen, um ein Anhalten der Werkstücke am Bearbeitungszentrum zu vermeiden und damit Zeit zu sparen. Dabei wurde nach jedem Bearbeitungsgang das Bearbeitungszentrum entlang der Fördereinrichtung bis zum nächsten Werkstück zurückgefahren und das Bearbeitungszentrum dann wieder für die Dauer des Bearbeitungsvorganges synchron mit dem betreffenden Werkstück auf der Fördereinrichtung mitgeführt.

Damit sich bei den derartigen im kontinuierlichen Durchlauf arbeitenden Maschinen die Rüstzeiten für die einzelnen Bearbeitungsaggregate kürzer gestalten ließen, hat man die einzelnen Bearbeitungsaggregate an Schablonen angebracht, die für das jeweilig anzubringende Bohrbild hergerichtet waren und als Ganzes ausgewechselt werden konnten. Dies erforderte einen hohen Aufwand insbesondere an Bearbeitungsaggregaten, der bei einer Großserienfertigung hingenommen werden kann. Für die kommissionsweise Bearbeitung verschiedenartiger Werkstücke war eine Maschine dieser Art nicht geeignet.

Zum anderen hat man bei Maschinen der eingangs genannten Art einen diskontinuierlichen Durchlauf der Werkstücke vorgesehen, die am Bearbeitungszentrum länger angehalten wurden, um mit wenigen Bearbeitungsaggregaten das gesamte Bohrbild jedes Werkstücks bewältigen zu können. Dabei wurden die Bearbeitungsaggregate an verfahrbaren Supporten des Bearbeitungszentrums oberhalb der Fördereinrichtung angeordnet, wobei auf elektronischem Wege eine Positionierung der Aggregate entsprechend dem Bohrbild während des Bearbeitungsganges erfolgte. Insoweit war hier für die Erstellung des Bohrbildes eine Programmsteuerung erforderlich, die für unterschiedliche Bohrbilder umgestellt werden mußte. Auch mit einer solchen Maschine war nur eine Serienfertigung möglich, wenngleich hier der Aufwand für die Umrüstung auf unterschiedliche Bohrbilder geringer war.

Es waren auch schon anderweitige Maschinen zum Bohren von Dübellöchern und Einsetzen von Dübeln in die Schmalseiten von plattenförmigen Werkstücken bekannt, vgl. US-PS 1 982 713, bei denen entlang einer Förderstrecke für die plattenförmigen Werkstücke die einzelnen erforderlichen Aggregate hintereinander angeordnet waren. Jedes dieser Aggregate bildete eine Bearbeitungsstation, an der die Werkstücke für den jeweiligen Bearbeitungsvorgang angehalten wurden. Bei einer solchen Maschine hat man einen taktweisen Vorschub der plattenförmigen Werkstücke aber nur deshalb vorgesehen, weil nacheinander an einer einzigen Stelle mehrere Bearbeitungsvorgänge, wie Bohren des Dübellochs, Leimangabe und Einsetzen des Dübels, vorgenommen werden mußten.

Der Erfindung liegt nun die Aufgabe zugrunde, eine Maschine der gattungsgemäßen Art derart auszubilden, daß neben einer Serienfertigung von Werkstücken mit gleichen Bohrbildern auch eine kommissionsweise Fertigung von Werkstücken mit unterschiedlichen Bohrbildern mittels einer Programmsteuerung möglich ist.

Diese Aufgabe wird nach der Erfindung bei einer Maschine der gattungsgemäßen Art durch die kennzeichnenden Merkmale des Patentanspruchs 1 gelöst.

Der besondere Vorteil einer erfindungsgemäßen Maschine liegt in der besonders hohen Flexibilität, mit der sich die einzelnen Bearbeitungsaggregate, die nun nicht mehr als ein einheitliches Bearbeitungszentrum zusammengefaßt sind, der ihnen jeweils zukommenden Aufgabe anpassen lassen. Die einzelnen Bearbeitungsstationen können nach einem jeweils für sie erarbeiteten Programm gesteuert werden, so daß nicht stets das gesamte Programm des Bearbeitungszentrums umgestellt werden muß, was insbesondere deshalb von Vorteil ist, weil sich die einzelnen Bohrbilder der Werkstücke oft nur in Quer- oder in Längsrichtung voneinander unterscheiden und entsprechend nur eine der Bearbeitungsstationen umpositioniert werden muß. Außerdem steht während der Förderdauer jedes Taktintervalls genügend Zeit zur Verfügung, die einzelnen Bearbeitungsstationen auf das ankommende Werkstück vorzubereiten. Dazu können die Werkstücke Codierungen mit dem jeweils betreffenden Lochbild besitzen, das von dem Bearbeitungszentrum anzubringen ist, wobei die Abfragung der Kodierung nicht an der jeweiligen Bearbeitungsstation selbst erfolgen muß, sondern schon an der vorhergehenden erfolgen kann, damit während der Förderzeit der Werkstücke sich die betreffende Bearbeitungsstation schon auf das neue Bohrbild umstellt.

Weitere vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigt

Fig. 1 eine schematische Draufsicht auf eine Maschine zum Bohren und Einsetzen von Beschlagteilen in plattenförmige Möbelteile bei Serienfertigung;

Fig. 2 die Draufsicht der Maschine nach Fig. 1 bei kommissionsweiser Fertigung jeweils unterschiedlicher aufeinanderfolgender Werkstücke;

Fig. 3 eine schematische Seitenansicht der Maschine nach Fig. 1 und 2 und

Fig. 4 eine Draufsicht auf die Übernahme- und Querbohrstation der Maschine nach den Fig. 1 bis 3 in etwas detaillierterer Darstellung.

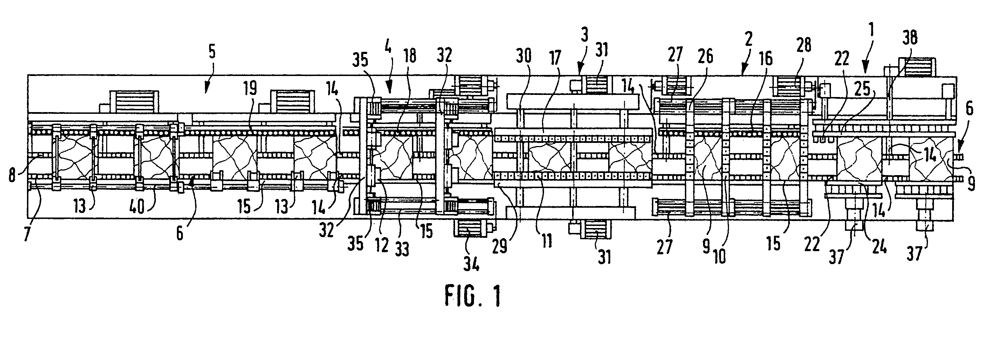

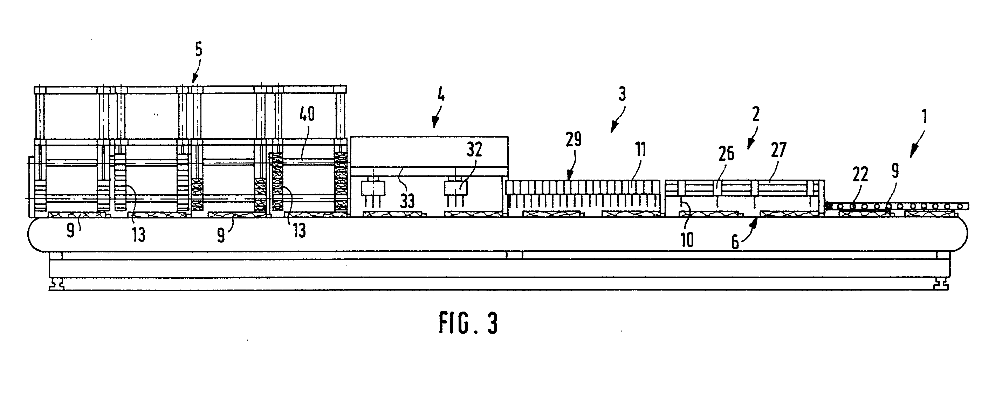

Die Fig. 1 bis 3 zeigen den grundsätzlichen Aufbau einer Maschine zum Bohren und Einsetzen von Beschlagteilen in plattenförmige Werkstücke, bei denen es sich insbesondere um Korpusteile von Möbeln, wie Korpusseiten, handelt.

Die Maschine besitzt eine Übernahmestation 1, an der die zu bearbeitenden Möbelteile auf einer entsprechenden Fördervorrichtung beispielsweise kontinuierlich ankommen. Hier werden die einzelnen Werkstücke 9 auf die nachfolgenden Bearbeitungsstationen zentriert und ihr Vorschub wird auf eine taktweise Förderung umgestellt.

Als erstes passieren die Werkstücke 9 hinter der Übernahmestation 1 eine Querbohrstation 2, welche die Aufgabe hat, diejenigen Lochreihen in die Werkstücke einzubringen, die im wesentlichen quer zur Förderrichtung liegen.

Danach durchlaufen die Werkstücke eine Längsbohrstation 3, in der diejenigen Lochreihen in die plattenförmigen Werkstücke 9 eingebohrt werden, welche im wesentlichen in Längsrichtung der Werkstücke bzw. in deren Förderrichtung liegen.

Des weiteren erreichen die Werkstücke 9 dann eine Sonderbohrstation 4, an der solche Bohrungen der Werkstücke 9 angebracht werden, die nicht in die üblichen Bohrbilder mit Quer- und Längsausrichtung passen.

Schließlich werden die Werkstücke einer Beschlagteileeinsatzstation 5 zugeführt, an der in die in Betracht kommenden Löcher der Werkstücke 9 Beschlagteile automatisch eingesetzt werden.

Die einzelnen Stationen 1 bis 5 sind entlang einer Fördervorrichtung 6 angeordnet, die aus zwei parallel zueinander liegenden Ketten 7 und 8 besteht. Die Ketten 7 und 8 werden synchron taktweise angetrieben und fördern die Werkstücke im Taktabstand zu den einzelnen Bearbeitungsaggregaten der Bearbeitungsstatiionen 2 bis 5. Dabei handelt es sich um Bearbeitungsaggregate 10, 11 und 12 der Querbohrstation 2, der Längsbohrstation 3 und der Sonderbohrstation 4 sowie um Beschlagteileeinsetzaggregate 13 der Beschlagteileeinsetzstation 5.

Die Ketten 7 und 8 besitzen jeweils in Querrichtung fluchtende Mitnehmernocken 14, die in Längsrichtung jeder Kette 7 und 8 im Taktabstand hintereinander angeordnet sind. Sie haben die Aufgabe, das betreffende Werkstück 9 in seiner Winkligkeit exakt auf der Fördervorrichtung 6 zu halten. Der Abstand der Mitnehmernocken 14 kann für besonders kleine Werkstücke noch halbiert werden, wenn jeweils zwischen zwei festen Mitnehmernocken 14 in Förderrichtung noch ein automatisch ausfahrbarer bzw. einsenkbarer Mitnehmernocken vorgesehen ist.

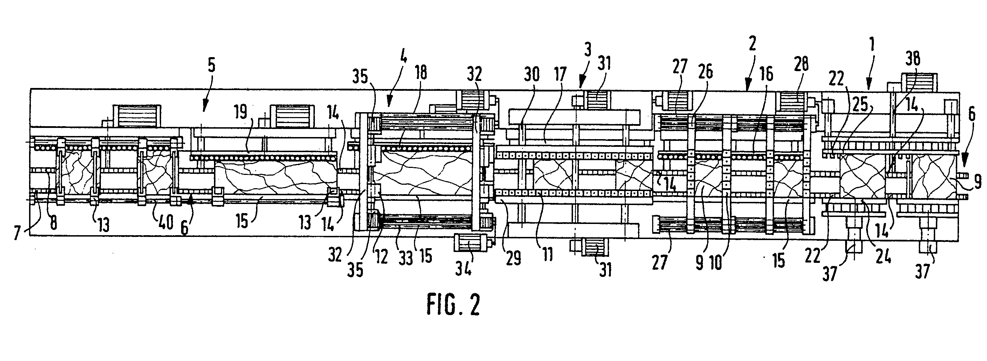

Die Führung der einzelnen Werkstücke 9 durch die gesamte Maschine hindurch erfolgt längs einer sogenannten Null-Linie, welche durch geradlinig zueinander fluchtende Anschläge 15 der Bearbeitungsstationen 2 bis 5 an der einen Seite der Fördervorrichtung 6 gebildet werden. Auf diese Null-Linie richtet die Übernahmestation 1 die Werkstücke 9 aus. Sowohl bei der in Fig. 1 veranschaulichten Serienfertigung gleicher Werkstücke 9 als auch bei der in Fig. 2 gezeigten kommissionsweisen Fertigung der dortigen Werkstücke 9 liegen alle in der Maschine befindlichen Werkstücke 9 jeweils mit einer ihrer geraden Seiten, vorzugsweise einer der Längsseiten, an dem Festanschlag 15 an, der sich durch sämtliche Bearbeitungsstationen 2 bis 5 hindurchzieht.

An der gegenüberliegenden Seite der Fördervorrichtung 6 haben die Bearbeitungsstationen 2 bis 5 in Querrichtung zur Förderrichtung verfahrbare Seitenanschläge 16, 17, 18 und 19. Bei der Serienfertigung gemäß Fig. 1 liegen naturgemäß diese Anschläge 16 bis 19 fluchtend in Förderrichtung hintereinander, während sie bei der kommissionsweisen Fertigung der Werkstücke gemäß Fig. 2 jeweils auf die Breite des sich in der betreffenden Bearbeitungsstation 2 bis 5 befindlichen Werkstücks 9 eingestellt sind. Dabei können jeweils zwei gleiche Werkstücke, die mit halbem Taktabstand gefördert werden, sich in einer der Bearbeitungsstationen 2 bis 5 befinden, um die gesamte Maschine besser ausnützen zu können. Dies ist durch die vorerwähnten aus- und einfahrbaren Mitnehmernocken der Transportketten 7 und 8 möglich, die im halben Taktabstand hinter den festen Mitnehmernocken 14 angeordnet sind.

Sowohl die Seitenanschläge 15 als auch die variablen Seitenanschläge 16 bis 19 der Bearbeitungsstationen 2 bis 5 bestehen jeweils aus in Förderrichtung fluchtend hintereinander angeordneten Seitenrollen 20 und 21.

Die Übernahmestation 1 richtet die ankommenden Werkstücke 9 im Taktabstand aus. Innerhalb dieser Station werden die Werkstücke 9 auf Transportrollen 22 weiterbewegt, für die ein mit der Fördervorrichtung 6 gemeinsamer oder separater Antrieb 38 vorgesehen sein kann. Auf den Transportrollen 22 der Übernahmestation 1 werden die Werkstücke 9 durch Seitanschläge 24 und 25 geführt, wobei sich der an der einen Seite der Fördervorrichtung 6 befindliche Seitanschlag 24 in einer Flucht mit den hintereinander fluchtend liegenden Seitanschlägen 15 der Bearbeitungsstationen 2 bis 5 befindet.

Die ankommenden Werkstücke 9 laufen in der Bearbeitungsstation 1 gegen einen Auslöseanschlag 23, der den taktweisen Betrieb der Fördervorrichtung 6 freigibt. Damit die Werkstücke 9 dann weiter von der Fördervorrichtung 6 mitgenommen werden, können die Transportrollen 22 quer zur Fördervorrichtung 6 seitlich verfahren werden. Dazu dienen beispielhaft pneumatische Antriebe 37.

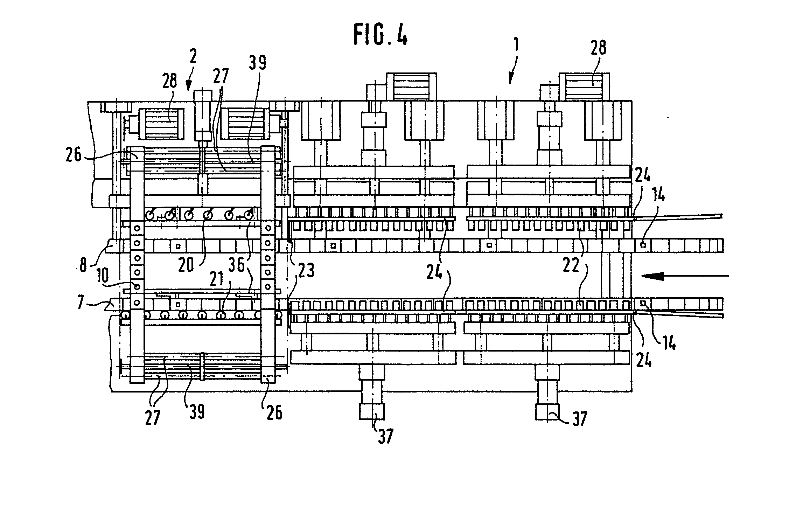

Die Anordnung der Transportrollen 22 der Bearbeitungsstation 1 und der Querantriebe 37 hierfür zeigt auch Fig. 4. Dort erkennt man weiter in detaillierter Darstellung die Querbohrstation 2, welche die Werkstücke 9 nach der Übernahmestation 1 als erstes erreichen.

Diese Bohrstation 2 besitzt oberhalb der Fördervorrichtung 6 sich über den Durchlaufbereich der Werkstücke 9 hinweg erstreckende Querbalken 26. Eine Vielzahl der Bohraggregate 10 ist an jedem der Querbalken 26 angeordnet, wobei diejenigen Bohraggregate 10, die bei dem jeweiligen Bearbeitungsgang nicht benötigt werden, nach oben aus der Bearbeitungszone herausgefahren werden können. Dies genügt als Anpassungsmaßnahme, da die Querbohrungen in der Regel gleiche Abstände haben. Dagegen muß der Abstand der Querlochreihen bei den einzelnen Werkstücken variierbar sein und deshalb sind die Balken 26 in Fördervorrichtung verfahrbar. Dazu sind die Querbalken 26 auf Geradführungen 27 parallel zur Fördervorrichtung 6 gelagert und werden über einen Antriebsmotor 28 und Spindelantriebe 39 positioniert.

Während des Bearbeitungsvorganges ändern die Bohraggregate 10 ihre Höhenlage nicht, vielmehr werden statt dessen die einzelnen Werkstücke 9 gegen die Bohraggregate 10 nach oben hin angehoben. Dazu dient eine Hubvorrichtung 36, die neben den Ketten 7 und 8 der Fördervorrichtung 6 angeordnet ist und mit dazu parallelen Hubelementen die Werkstücke von unten her erfaßt und über das Förderniveau der Fördervorrichtung 6 hinaus nach oben drückt. Über geeignete Anschläge der Querbohrstation 2 können dabei die Werkstücke in ihrer Winkligkeit exakt auch in Höhenrichtung geführt werden. Diese Anschläge sind in der Zeichnung im einzelnen nicht dargestellt.

Die Längsbohrstation 3 ist im wesentlichen analog zur Querbohrstation 2 aufgebaut; lediglich sind hier entsprechend die Bohraggregate 11 an sogenannten Längsbalken 29 aufgehängt, die über Querführungen 30 und zugehörige Antriebe 31 quer zur Fördervorrichtung 6 verfahren werden können. Ebenso wie bei der Querbohrstation 2 können auch bei der Längsbohrstation 3 einzelne der Bohraggregate 11, sofern sie nicht benötigt werden, aus der Bearbeitungszone herausgesteuert werden.

Die Sonderbohrstation 4 hat Bohraggregate 12, die längs zweiter Koordinaten längs und quer zur Fördervorrichtung 6 verfahren werden können. Dazu besitzt die Sonderbohrstation 4 ebenfalls Querbalken 32, die auf Geradführungen 33 parallel zur Fördervorrichtung 6 gelagert sind. Über Stellantriebe 34 lassen sich die Querbalken 32 in Förderrichtung positionieren. An den Querbalken 32 sind die Bohraggregate 12 quer zur Fördervorrichtung 6 verfahrbar. Dazu dienen an den Querbalken 32 angeordnete Stellantriebe 35.

Die Aggregate 13 für das Beschlageinsetzen der Station 5 können ebenfalls längs zur Fördervorrichtung 6 und quer dazu verfahren werden. In einer ersten Abteilung unmittelbar hinter der Sonderbohrstation 4 besitzt die Beschlageinsetzstation 5 Aggregate 13, die an einer Längsführung 40 gelagert sind und von der Seite des Festanschlags 15 her die auf der Fördervorrichtung 6 befindlichen Werkstücke 9 übergreifen. In einer zweiten Abteilung besitzt die Beschlageinsetzstation 5 Einsetzaggregate 13, die quer über die Fördervorrichtung 6 hinweg verfahrbar sind.

Ebenso wie die Querbohrstation 2, was anhand von Fig. 4 gezeigt ist, können auch die anderen Bearbeitungsstationen 3 bis 5 Hubvorrichtungen besitzen, welche die einzelnen Werkstücke 9 von der Fördervorrichtung 6 nach oben ab gegen die Bearbeitungsaggregate hin anheben. Dies ist im einzelnen in der Zeichnung nicht näher dargestellt.

## Patentansprüche

1. Maschine zum Bohren und Einsetzen von Beschlagteilen in plattenförmige Werkstücke aus Holz oder holzartigen Werkstoffen, wie Möbelteile oder Teile für den Innenausbau, mit einer Fördervorrichtung für die Werkstücke und mit einem daneben oder darüber angeordneten Bearbeitungszentrum mit Bearbeitungsaggregaten für das Querbohren von quer zur Förderrichtung der Werkstücke gerichteten Bohrbildern, für das Längsbohren von in der Förderrichtung der Werkstücke gerichteten Bohrbildern und für das Einsetzen der Beschlagteile, dadurch gekennzeichnet, daß das Bearbeitungszentrum in einzelne, entlang der Fördervorrichtung (6) hintereinander angeordnete Bearbeitungsstationen (2, 3, 5) für das Querbohren, das Längsbohren und das Beschlagteileeinsetzen gegliedert ist und die Bearbeitungsaggregate (10, 11, 13) dieser Bearbeitungsstationen (2, 3, 5) unabhängig voneinander positionierbar sind, daß die Fördervorrichtung (6) taktweise gesteuert ist und aus einem Kettenpaar mit konstantem Kettenabstand besteht, dessen Ketten (7, 8) im Taktabstand Mitnehmernocken (14) besitzen, und daß die Bearbeitungsstationen (2, 3, 5) entlang der einen Seite der Fördervorrichtung (6) geradlinig zueinander fluchtende Festanschläge (15) und entlang der anderen Seite der Fördervorrichtung (6) quer zur Förderrichtung verfahrbare Anschläge (16—

2. Maschine nach Anspruch 1, dadurch gekennzeichnet, daß an den Ketten (7, 8) jeweils in Förderrichtung zwischen zwei fest installierten Mitnehmernocken (14) ein ausfahrbarer Nocken angeordnet ist.

3. Maschine nach Anspruch 1 oder 2, dadurch gekennzeichnet, daß die Festanschläge (15) und/oder die verfahrbaren Anschläge (16—19) der Bearbeitungsstationen (2, 3, 5) durch entlang der Fördervorrichtung (6) angeordnete Seitenrollen (20, 21) gebildet sind.

4. Maschine nach einem der Ansprüche 1 bis 3, dadurch gekennzeichnet, daß die verfahrbaren Anschläge (16—19) der Bearbeitungsstationen (2, 3, 5) quer zur Förderrichtung federnd ausgebildet sind.

## Claims

1. Machine for drilling and fittings inserting into panel-like work-pieces made of wood or similar materials like furniture components or pieces for interior coinstructions, having a conveying device for the work-pieces and having a machining centre located laterally or above with operating units for the transverse drilling of boring pictures running crosswise in relation to the feed direction of the panels and for the longitudinal drilling boring pictures running in feed direction of the work-pieces and for the insertion of the fittings, in that the machining centre is arranged in individual tandem joint operating stations to (2, 3, 5) for the transverse and longitudinal drilling and for the fittings inserting along the conveying device (6); the processing units (10, 11, 13) of these operating stations (2, 3, 5) can independently be positioned; the conveying device (6) is controlled in fixed-cycle operation and consists of two chain tracks in equidistance where the chains (7, 8) have carrier dogs (14) arranged in cycle distance; the operating stations (2, 3, 5) have along one side of the conveying device (6) straight-lined fixed points (15) and along the other side of the conveying device (6) adjustable stops (16—19) for the workpieces (9) crosswise in relation to the feed direction.

2. Machine according to claim 1 is characterized in that at the chains (7, 8) seen in feed direction there is one retractable dog arranged between two fixed ones (14).

3. Machine according to claim 1 or 2 is characterized in that the fixed points (15) and/or the adjustable stops (16—19) of the operating stations (2, 3, 5) are formed by lateral rollers (20, 21) located along the conveying device (6).

4. Machine according to one of the claims 1 to 3 is characterized in that the adjustable stops (16—19) of the operating stations (2, 3, 5) are arranged in spring loaded version crosswise to the feed direction.

## Revendications

1. Machine pour le perçage et la pose de ferrures dans des pièces à usiner en forme de plateaux composées de bois ou de matériels ligniformes tels que des élements de meubles ou bien des pièces pour l'aménagement intérieur, avec un dispositif de transport pour les pièces à usiner et avec un centre d'usinage installé à côté ou au-dessus avec des dispositifs d'usinage pour le perçage transversal des images de perçage arrangées en sens transversal relatif à la direction alimentation des pièces, pour le perçage longitudinal des images de perçage arrangées en direction d'alimentation des pièces et pour la pose de ferrures, caractérisée en ce que le centre d'usinage est divisé en stations d'usinage différentes (2, 3, 5), le long du dispositif du transport (6) arrangées l'une après l'autre pour le perçage transversal et longitudinal et la pose de ferrures et que les dispositifs d'usinage (10, 11, 13) de celles stations d'usinage (2, 3, 5) peuvent être positionnées indépendemment l'une de l'autre que le dispositif de transport (6) est commandé pas à pas (en cadence) et est composé d'une paire de chaînes à distance invariable dont les chaînes (7, 8) sont équipées de taquets de transport (14) en distance de cadence et que les stations d'usinage (2, 3, 5) ont des butées fixes (15) arrangées en ligne droite le long d'une côté du dispositif de transport (6) et des butées ajustables (16—19) le long d'autre côté du dispositif de transport (6) en sens transversal relatif à la direction d'alimentation.

2. Machine suivant la revendication 1, caractérisée en ce que chaque fois un taquet escamotable est installé aux chaînes (7, 8) en direction d'alimentation entre deux taquets de transport (14) fixes.

3. Machine selon revendication 1 ou 2, caractérisée en ce que les butées fixes (15) et/ou les butées ajustables (16—19) des stations d'usinage (2, 3, 5) sont formées par des rouleaux laterals (20, 21) installés le long du dispositif de transport (6).

4. Machine selon les revendications 1 à 3, caractérisée en ce que les butées ajustables (16—19) des stations d'usinage (2, 3, 5) sont formés à ressorts en sens transversal relatif à la direction d'alimentation.

FIG. 1

FIG. 2

FIG. 3

0 105 223

FIG. 4